# EUROPÄISCHE PATENTSCHRIFT

(11) **EP 1 472 512 B1**
(45) Veröffentlichungstag und Bekanntmachung des Hinweises auf die Patenterteilung: **22.10.2008**
(21) Anmeldenummer: 03737282.8
(22) Anmeldetag: 28.01.2003
(51) Int. Cl.: G01J 3/18, G01J 3/12

(54) **VERFAHREN ZUR WELLENLÄNGENKALIBRATION BEI EINEM ECHELLESPEKTROMETER**
METHOD FOR WAVELENGTH CALIBRATION IN AN ECHELLE SPECTROMETER
PROCEDE D'ETALONNAGE EN LONGUEUR D'ONDE D'UN SPECTROMETRE ECHELLE

(30) Priorität: 07.02.2002 DE 10205142
(43) Veröffentlichungstag der Anmeldung: 03.11.2004
(73) Patentinhaber: Gesellschaft zur Förderung angewandter Optik, Optoelektronik, Quantenelektronik und Spektroskopie e.V. (G O S), 12489 Berlin (DE); Gesellschaft zur Förderung der Analytischen Wissenschaft e.V., 44139 Dortmund (DE)
(72) Erfinder: FLOREK, Stefan, 12526 Berlin (DE); BECKER-ROSS, Helmut, 12557 Berlin (DE); HEITMANN, Uwe, 12099 Berlin (DE)
(74) Vertreter: Weisse, Renate
(86) Internationale Anmeldenummer: PCT/EP2003/000832
(87) Internationale Veröffentlichungsnummer: WO 2003/067204

(56) Entgegenhaltungen:
- DE-A- 3 326 868
- DE-A- 4 118 760
- DE-A- 19 545 178

## Beschreibung

### Technisches Gebiet

Die Erfindung betrifft ein Verfahren zur Wellenlängen-Kalibrierung von Echelle-Spektrometern nach Anspruch 1.

Echelle-Spektrometer sind Spektrometer, die mit einem Echelle-Gitter arbeiten. Diese Gitter zeichnen sich durch besonders hohe Winkeldispersion aus, d.h. durch die Fähigkeit eng benachbarte Wellenlängen noch winkelmäßig voneinander zu trennen. Dies hat den Vorteil einer hohen spektralen Auflösung bei geringen Geräteabmessungen. Echelle-Gitter sind daher für die hochauflösende Spektroskopie, wie AtomabsorptionsSpektroskopie mit kontinuierlichen Strahlungsquellen besonders geeignet. Ein Spektrometer mit einem Echelle-Gitter arbeitet üblicherweise in sehr hohen Beugungsordnungen. Typisch sind Werte zwischen der 20. und der 150. Ordnung. Es hat dabei innerhalb jeder Ordnung nur einen vergleichsweise geringen freien Spektralbereich.

Um spektrale Überlagerungen verschiedener Beugungsordnungen in der Austrittsebene des Spektrometers zu vermeiden, werden Echelle-Spektrometer in Kombination mit interner, senkrecht zur Echelle-Dispersion verlaufender Ordnungstrennung und mit flächenhafter Spektrenform verwendet. Es gibt auch die Verwendung von Echelle-Gittem in Kombination mit einem Vormonochromator zur Ordnungstrennung als sogenannte Doppel-Spektrometer-Anordnung. Dabei wird die Strahlung zum Beispiel mittels eines Prismas spektral vorzerlegt. Nur die Strahlung aus einem begrenzten Spektralbereich, der im wesentlichen einer Ordnung entspricht, tritt in das Echelle-Spektrometer ein. Das entstehende Echelle-Spektrum hat eine lineare Spektrenform. Für die Ordnungsauswahl mittels Vormonochromator kommen als dispersive optische Elemente Beugungsgitter oder Prismen zum Einsatz. Die Dispersionsrichtungen des Vormonochromators und des Echelle-Gitters verlaufen parallel.

Für die meisten Anwendungen ist es erforderlich, das Spektrometer zu kalibrieren. Jedem geometrischen Ort in der Austrittsebene des Spektrometers wird dabei eine Wellenlänge zugeordnet. Die Kalibrierung kann sich aufgrund von Temperaturschwankungen, Vibrationen oder anderen mechanischen Belastungen verändern. Dann ist ggf. eine erneute Kalibrierung erforderlich.

### Stand der Technik

Aus der DE 41 18 760 A1 ist eine Doppel-Spektrometer-Anordnung bekannt, bei der ein Flüssigkeitsprisma mit variablem Prismenwinkel ein Spektrum mit geringer, einstellbarer Dispersion erzeugt. Das Spektrum wird auf einen Zwischenspalt abgebildet, welcher gleichzeitig den Eintrittsspalt, d.h. die Feldblende für ein nachfolgendes Echelle-Spektrometer bildet. Der Zwischenspalt schneidet aus dem Gesamtspektrum der zu messenden Strahlungsquelle ein Teilspektrum aus, dessen spektrale Bandbreite zumindest geringer ist, als die Bandbreite der entsprechenden Beugungsordnung des Echelle-Gitters. Diese Anordnung arbeitet mit einem schmalen Zwischenspalt, dessen Breite konstant ist. Die Breite des Zwischenspaltes wird dabei ähnlich der Breite eines Bildelements des Detektors (Pixel) gewählt. Die Breite des Eintrittsspalts hingegen ist vergleichsweise groß. Die Auswahl der spektralen Bandbreite der durch den Zwischenspalt tretenden Strahlung wird durch die Variation der Lineardispersion getroffen, indem der Prismenwinkel entsprechend eingestellt wird. Die Wellenlängenposition des Spektrenausschnittes wird über eine Drehung des Prismas eingestellt. Die Lage des Spektrenausschnittes auf dem Detektor des Echelle-Spektrometers wird über eine Drehung des Echelle-Gitters eingestellt.' Das für die Ordnungstrennung verwendete Prisma ist vergleichsweise aufwendig herzustellen. Die Einstellgenauigkeit der Wellenlängenposition wird durch die mechanische Einstellgenauigkeit der Winkel am Echelle-Gitter bzw. am Prisma des Vormonochromators bestimmt.

Aus der DE 195 45 178 A1 ist eine Spektrometer-Anordnung bestehend aus einem Echelle-Spektrometer und einem vorgeschalteten Prismenspektrometer zur Ordnungstrennung bekannt, welche das Neonspektrum einer Niederdruckentladungslampe als Linienstrahler zur Wellenlängen-Kalibrierung des Echelle-Spektrometers verwendet. Die Strahlung des Linienstrahlers wird unter Umgehung des Prismenspektrometers durch einen Hilfsspalt in der Ebene des Zwischenspalts in das Echelle-Spektrometer eingeblendet und mittels zusätzlicher Detektorelemente am Strahlungsempfänger detektiert. In dieser Anordnung sind die Breiten des Hilfsspaltes und des Zwischenspaltes konstant, gleich und schmaler als der Eintrittsspalt des Vormonochromators. Der Zwischenspalt bildet in bekannter Weise die Feldblende für die Doppel-Spektrometer-Anordnung. Der Eintrittsspalt der beschriebenen Anordnung ist in seiner Breite in Stufen veränderbar. Er dient bei festem Prismenwinkel zur spektralen Begrenzung des in das Echelle-Spektrometer fallenden Strahlenbündels. Die für die Wellenlängen-Kalibrierung ohne Vorverlegung durch den Hilfsspalt tretende Strahlung des Linienstrahlers erzeugt auf dem Detektor ein charakteristisches Muster von Spektrallinien. Dabei liegen nicht alle Linien in einer Beugungsordnung des Echelle-Gitters vor, sondern stellen eine Überlagerung der verschiedenen Beugungsordnungen des Gitters dar. Jede Linie repräsentiert exakt ein Wertepaar von Einfalls- und Beugungswinkel am Gitter. Bei ausreichender Liniendichte wird bei jeder Gitterstellung mindestens eine Linie auf dem Referenz-Detektor abgebildet. Durch die mechanische Kopplung der Detektoren auf einem gemeinsamen Siliziumchip kann für jede Meßwellenlänge die Wellenlängenkalibrierung des Meß-Detektors mit Hilfe der Position einer Referenzlinie auf dem zweiten, parallel verlaufenden Referenz-Detektor durchgeführt werden. Die Einstellgenauigkeit der Wellenlängenpositionen wird abgesehen von den unterschiedlichen Abbildungsfehlern in Meß- und Referenzspektrum einzig durch die Meßgenauigkeit bei der Referenz-Spektrenmessung bestimmt. Dadurch wird sie unabhängig von der mechanischen Einstellgenauigkeit für das Echelle-Gitter.

Nachteilig bei den bekannten Anordnungen ist, daß jedes Detektorelement des Strahlungsempfängers mit Strahlung aus einem anderen Ort des Eintrittsspaltes, welcher signifikant breiter als der Zwischenspalt ist, beleuchtet wird. Dadurch kann ein Messfehler bei der Anwendung der Doppel-Spektrometer-Anordnung insbesondere bei Untersuchungen von Strahlungsquellen mit inhomogener Strahldichteverteilung entstehen.

Weiterhin wird die Einstellgenauigkeit für die Wellenlängenposition des mit dem Vormonochromator ausgewählten Wellenlängenabschnittes vollständig durch die mechanische Einstellgenauigkeit des für den Vormonochromator verwendeten dispergierenden Elementes dominiert. Weiterhin reicht bei sehr hoher Lineardispersion des Echelle-Spektrometers oftmals die Liniendichte der Kalibrierlichtquelle nicht aus, um bei jeder Gitterstellung mindestens eine Kalibrierlinie auf den Detektor abzubilden.

Die DE 33 26 868 A1 offenbart ein Echelle-Spektrometer mit Vormonochromator. Die Anordnung weist einen einstellbaren Zwischenspalt auf. Die Einstellung der Anordnung auf eine Wellenlängen erfolgt dadurch, daß zunächst die zugehörige Spektralordnung aus den in einem Rechner gespeicherten Daten ermittelt wird und anschließend die optische Anordnung durch Prismendrehung und Spaltbreitenänderung so eingestellt wird, daß die Ordnung in der Fokalebene des Echellesystems erscheint. Aufgrund der wellenlängenabhängigen Prismendispersion muß bei der bekannten Anordnung eine Anpassung der Spaltbreite erfolgen, wenn die unterschiedlichen Ordnungen vollständig durch den Zwischenspalt gelangen sollen.

### Offenbarung der Erfindung

Es ist Aufgabe der Erfindung ein Verfahren zur Kalibrierung einer Doppel-Spektrometer-Anordnung der eingangs genannten Art zu schaffen, bei welcher durch geregelte Drehungen von Echelle-Gitter und dispergierendem Element des Vormonochromators eine vollständige Wellenlängen-Kalibrierung der gesamten Anordnung ermöglicht wird. Es handelt sich um ein kalibrierbares Spektrometer, bei dem der relative Verlauf der spektralen Intensitätswerte innerhalb des ausgewählten Wellenlängenabschnittes unempfindlich gegenüber Intensitätsschwankungen in einer Strahlungsquelle mit inhomogener Strahldichteverteilung ist.

Erfindungsgemäß wird die Aufgabe durch Merkmale entsprechend dem Kennzeichen des Anspruchs 1 gelöst.

Bei Verwendung eines schmalen Eintrittsspaltes und eines breiteren Zwischenspaltes bildet der Eintrittsspalt die Feldblende der gesamten optischen Anordnung. Für unterschiedliche Wellenlängen wird immer der gleiche Ort der Strahlungsquelle auf jedes Detektorpixel abgebildet. Das Bild des Eintrittsspalts kann z.B. durch thermische und mechanische Einflüsse in der Zwischenspalt-Ebene wandern. Durch die Möglichkeit dieses Bild als Wellenlängenabschnitt eines kontinuierlichen Spektrums auf dem Detektor abzubilden und durch Einstellung des Vormonochromators immer auf die gleiche Position auf dem Detektor zu justieren, kann diese Wanderungsbewegung quasi Online kompensiert werden. Es entsteht also eine hochgenau justierbare Anordnung, die unabhängig von räumlichen Veränderungen in der Strahlungsquelle richtige spektrale Intensitätsverhältnisse liefert, die weitgehend unabhängig von thermischen und mechanischen Einflüssen sind. Das kontinuierliche Spektrum stellt sicher, daß in jeder Ordnung und bei jeder Gittereinstellung ein positionierfähiger Intensitätspeak oder ein positionierfähiges Intensitätsprofil vorliegt. Dabei wird kein ideales Kontinuum benötigt, bei welchem exakt die gleiche Intensität auf allen Wellenlängen vorliegt. Es ist ausreichend, wenn Strahlung auf allen betrachteten Wellenlängen emittiert wird. Solche Strahlungsquellen sind zum Beispiel Edelgas-Hochdruck-Kurzbogenlampen.

Die Vorrichtung ist besonders gut für Anwendungen geeignet, bei denen ohnehin eine Strahlungsquelle mit kontinuierlichem Spektrum erforderlich ist. Dazu zählen Atomabsorptionsspektrometer, bei welchen die Korrektur von Untergrund-Störungen mit Kontinuumsstrahlern erfolgt, oder Atomabsorptionsspektrometer, mit Kontinuumsstrahlern als Meßlichtquelle. Der Kontinuumsstrahler kann aber auch ausschließlich zur Kalibrierung der Anordnung eingeblendet werden.

Die Breite des Eintrittsspaltes wird vorzugsweise so gewählt, daß die Breite seines Bildes auf dem Detektor der Breite eines Detektorelementes entspricht. Dadurch wird ein guter Kompromiss zwischen maximaler Auflösung und maximalem Lichtleitwert erreicht. Eine Verringerung der Eintrittsspaltbreite führt nicht zur Erhöhung der Auflösung. Eine Vergrößerung würde zwar den Lichtleitwert erhöhen, aber gleichzeitig zu einer verschlechterten Auflösung führen.

Die Breite des Zwischenspaltes ist veränderbar. Dann kann das Intentsitätsprofil auf dem Detektor für jede Wellenlänge so eingestellt werden, daß bei spektroskopischen Messungen nur die benötigte spektrale Bandbreite vorliegt und alle übrigen Wellenlängen blockiert werden. Das hat unter anderem den Vorteil, daß Streulicht verringert wird. Für die Kalibration des Vormonochromators mittels Kontinuumspektrum kann bei minimaler Spaltbreite die Messung der Flanken des Intensitätsprofils zur Positionierung verwendet werden.

In einer Ausgestaltung der Erfindung umfasst der Vormonochromator ein Prisma. Insbesondere Quarzprismen sind aufgrund ihrer hohen Transmission für Anwendungen im UV/VIS-Spektralbereich besonders geeignet. In einer weiteren Ausgestaltung der Erfindung ist der ortsauflösende Strahlungsempfänger ein CCD- oder PDA-Detektor.

In einer besonders bevorzugten Ausgestaltung der Erfindung ist der Vormonochromator als Littrow-Anordnung ausgebildet. Dadurch wird bei geringen Abbildungsfehlern und hoher Auflösung mit wenigen Bauteilen eine kompakte Anordnung möglich. Raumbedarf und Kosten werden dadurch verringert. Gleiches gilt für die Anordnung des Echelle-Spektrometers.

Vorteilhafterweise erfolgt die Wellenlängeneinstellung durch jeweilige Drehung der dispergierenden Elemente. Es ist aber auch möglich, die Einstellung an anderen optischen Komponenten, wie Spiegeln oder Detektor vorzunehmen.

In einer besonders bevorzugten Ausgestaltung der Erfindung umfassen die Mittel zur Wellenlängen-Kalibrierung des Echelle-Spektrometers eine Strahlungsquelle mit einem Linienspektrum, deren Strahlung auf den Zwischenspalt abbildbar ist, wobei Mittel zur Justierung einer mit dem Detektor aufgenommenen Linie auf eine Referenzposition vorgesehen sind. Diese Art der Kalibrierung ermöglicht die Wellenlängeneinstellung derart, daß der Restfehler nur durch den Meßfehler am Detektor und nicht durch den mechanischen Einstellfehler der Gitterdrehung bestimmt wird. Das Linienspektrum der Kalibrier-Strahlungsquelle kann in einem von der zu messenden Wellenlänge weit entfernten Wellenlängenbereich, d.h. in einer Beugungsordnung, die von der Ordnung der Meßwellenlänge deutlich unterschiedlich ist, liegen, solange nur die Beugungswinkel am Echelle-Gitter hinreichend dicht zusammen liegen. Durch Berechnung der Beugungswinkel von Meßwellenlänge und Referenzwellenlänge in den unterschiedlichen Beugungsordnungen kann auf sehr einfache Weise die der entsprechenden Winkelposition des Gitters entsprechende Wellenlänge eingestellt werden.

Für den Fall, daß die sich in allen Beugungsordnungen des Echelle-Gitters überlappenden Linien der Kalibrier-Strahlungsquelle zu weit auseinander liegen, können in einer weiteren Ausgestaltung der Erfindung ein oder mehrere zusätzliche Kalibrierspalte in Dispersionsrichtung des Echelle-Gitters neben dem Zwischenspalt und eine oder mehrere Strahlungsquellen mit Linienspektrum zur Beleuchtung dieser Kalibrierspalte vorgesehen sein. Dann tritt das Linienspektrum jeweils in Dispersionsrichtung verschoben mehrfach am Detektor auf. Linien der gleichen Wellenlänge sind dabei auf dem Detektor jeweils um den geometrischen Abstand ihres zugehörigen Spaltes vom Zwischenspalt, zu der Linie versetzt, die durch den Zwischenspalt selbst erzeugt wird. Die auf diese Weise erhöhte Liniendichte auf dem Detektor ermöglicht die Verringerung des Meßfehlers bei der Wellenlängenkalibrierung. Die realen geometrischen Abstände der Spaltöffnungen können mittels des Detektors für Spaltbilder gleicher Wellenlänge exakt gemessen werden.

Vorzugsweise sind das Prisma und das Echelle-Gitter derart angeordnet, daß die bei Temperaturänderungen in der gemeinsamen Dispersionsrichtung von Prismen-Vormonochromator und Echelle-Spektrometer durch Veränderung der Prismen- und Gitterdispersion hervorgerufenen Driften des Bildes des Eintrittsspalt am Ort des Zwischenspaltes und des Bildes des Eintrittsspaltes auf dem Strahlungsdetektor gegenläufig erfolgen. Bei Erhöhung der Umgebungstemperatur und daraus resultierender thermischer Ausdehnung des Gitterträgers vergrößert sich die Gitterkonstante. Bei gleichbleibendem Einfallswinkel am Echelle-Gitter verringert sich dabei der Beugungswinkel für eine monochromatische Wellenlänge. Die entsprechende Spektrallinie verschiebt sich auf dem Detektor in Richtung kleiner Wellenlängen.

Die Umgebungstemperatur beeinflußt weiterhin die Brechzahl des Prismenmaterials. Dadurch verschiebt sich das monochromatische Bild des Eintrittsspaltes am Ort des Zwischenspaltes. Das Echelle-Gitter wird für die so verschobene Wellenlänge unter einem veränderten Einfallswinkel beleuchtet. Ein vergrößerter Einfallswinkel am Echelle-Gitter führt zu einem verringerten Beugungswinkel. Bei entsprechender Positionierung von Gitter, Prisma und - falls vorhanden - optischen Komponenten, die die Dispersionsrichtung umkehren (Spiegel) kann erreicht werden, daß die beiden thermischen Effekte gerade gegenläufig gerichtet sind und im Resultat minimale Drift des Spektrums auf dem Detektor verursachen. Dadurch kann eine höhere Anfahrgenauigkeit bei der Vorpositionierung der Wellenlängenpositionen erreicht werden. Außerdem kann die notwendige Häufigkeit der Wellenlängenkalibrierung reduziert werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine schematische Darstellung eines Echelle-Spektrometers mit Vormonochromator
- Fig.2: zeigt eine Zwischenspalt-Anordnung im Detail
- Fig.3: zeigt die Zwischenspalt-Anordnung aus Fig.2 mit zusätzlichen Kalibrierspalten.
- Fig.4a: zeigt einen Ausschnitt mit dem Zwischenspalt und die kalibrierte Position eines monochromatischen Bildes des Eintrittsspaltes
- Fig.4b: zeigt die Intensitätsverteilung einer Strahlungsquelle mit kontinuierlichem Spektrum und einer Strahlungsquelle mit einem Linienspektrum in Referenzstellung am Detektor
- Fig.5a: ist die Darstellung aus Fig. 4a in nicht-kalibrierter Position
- Fig.5b: ist die Darstellung aus Fig. 4b in nicht-kalibrierter Position

### Beschreibung eines Ausführungsbeispiels

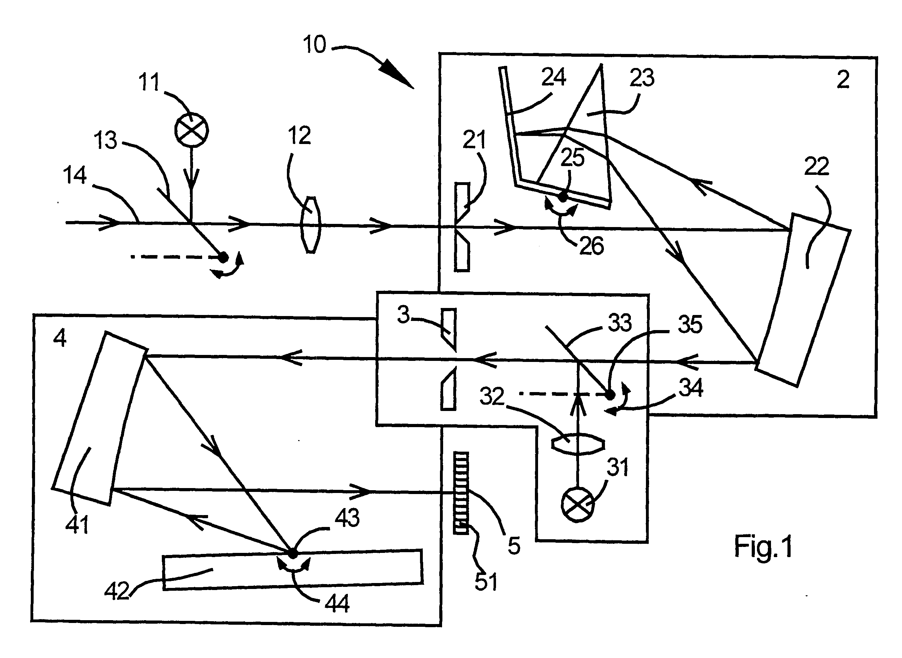

In Fig. 1 ist mit 10 eine Spektrometer-Anordnung bezeichnet. Die Anordnung 10 umfasst einen Vormonochromator 2 und ein Echelle-Spektrometer 4. Mit 21 ist der Eintrittsspalt des Vormonochromators 2 bezeichnet. Er wird zum kalibrieren von einer Strahlungsquelle 11 mit einem kontinuierlichen Wellenlängenspektrum beleuchtet. Eine solche Strahlungsquelle ist zum Beispiel eine Xenon-Hochdruck-Kurzbogenlampe. Hierfür sind im Meßstrahlengang 14 ein schwenkbarer Spiegel 13 und eine Linse 12 als abbildendes Element angeordnet. Der Eintrittsspalt 21 hat eine feste Spaltbreite von 25 Mikrometer, die der Breite eines Detektorelementes 51 einer CCD-Zeile 5 als ortsauflösendem Strahlungsempfänger entspricht. Der Eintrittsspalt 21 bildet die Feldblende für die Doppel-Spektrometer-Anordnung und definiert die Breite eines monochromatischen Bündels am Ort des Detektors 5.

Das einfallende divergente Strahlenbündel wird von einem Parabolspiegel 22 umgelenkt und parallelisiert. Die parallele Strahlung durchläuft ein Prisma 23. Dabei wird die Strahlung ein erstes Mal dispergiert. Nach Reflexion an einem Planspiegel 24, der hinter dem Prisma 23 angeordnet ist, durchläuft die Strahlung das Prisma 23 ein weiteres Mal. Dadurch wird eine annähernde Verdopplung der Dispersion erreicht. Die am Prisma wellenlängenabhängig abgelenkte Strahlung wird dann vom Spiegel 22 auf den Zwischenspalt 3 fokussiert. Durch den doppelten Durchgang am Prisma kann eine maximale Winkel-Dispersion erzeugt werden. Dies ist insbesondere im langwelligen Spektralbereich ab 600 nm wichtig, um hinreichend schmale Spektralintervalle aus dem Kontinuumsspektrum des Strahlers 11 am Zwischenspalt 3 ausblenden zu können. Die Wellenlängenpositionierung des Spektrenabschnittes am Ort des Zwischenspalts 3 kann durch elektromotorische Drehung von Prisma 23 und Planspiegel 24 um eine gemeinsame Achse 25 erfolgen. Dies ist durch einen Doppelpfeil 26 angedeutet.

Ein Teil der Strahlung mit definiert reduzierter spektraler Bandbreite tritt durch den Zwischenspalt 3 in das Echelle-Spektrometer 4. Dort trifft das divergente Bündel auf einen Parabolspiegel 41, der es parallelisiert. Der Parabolspiegel 41 reflektiert die parallele Strahlung in Richtung auf ein Echelle-Gitter 42. Nach Beugung am Echelle-Gitter 42 wird die Strahlung erneut vom Parabolspiegel 41 reflektiert und auf die CCD-Zeile 5 fokussiert. Diese wandelt den spektralen Intensitätsverlauf in elektrische Signale um, die anschließend zur Datenverrbeitung digitalisiert und weitergeleitet werden. Zur Wellenlängenauswahl kann das Echelle-Gitter 42 um eine Drehachse 43 parallel zu den Gitterfurchen bewegt werden. Dies ist durch einen Doppelpfeil 44 dargestellt.

Gitter und Prisma sind in dieser Anordnung so aufgestellt, daß die thermisch bedingten Wellenlängen-Driften im Vormonochromator sowie im Echelle-Spektrometer gegenläufig erfolgen.

Der Zwischenspalt 3 hat zwei bewegliche Spaltbacken, mit denen die Breite des Zwischenspaltes eingestellt werden kann. Bei minimal einstellbarer Breite treffen die Spaltbacken auf einen Anschlagstift mit definiertem Durchmesser. Dadurch können die Spaltbacken nicht weiter zusammenkommen und die Spaltbreite wird auf einen reproduzierbaren Wert an einem definierten Ort eingestellt. Diese Minimalbreite ist größer als die Breite der Detektorelemente und des Eintrittsspalts.

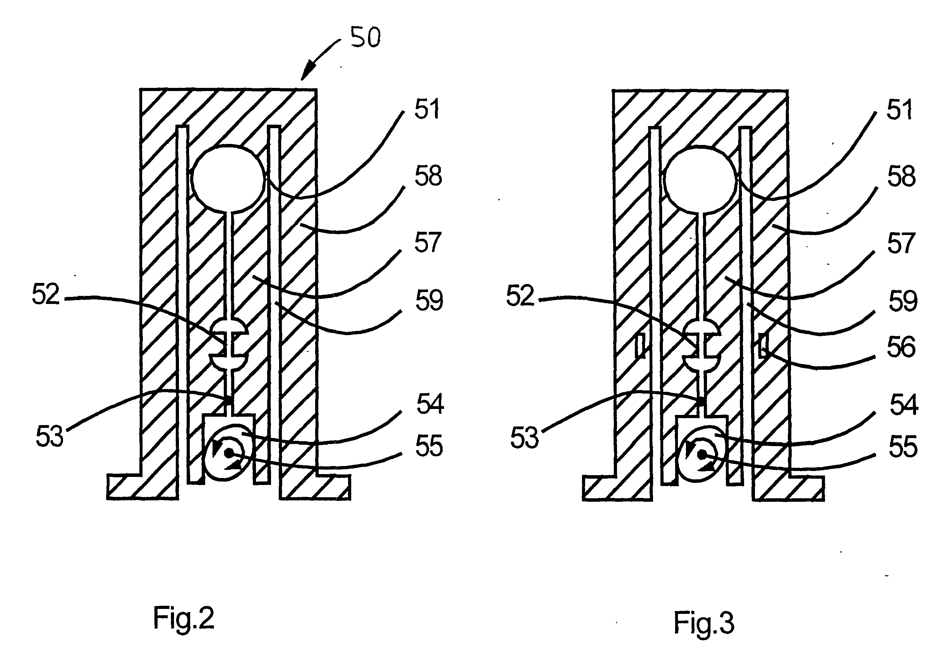

Fig. 2 zeigt im Detail ein Ausführungsbeispiel für die mechanische Anordnung 50 des Zwischenspaltes mit einstellbarer Spaltbreite. Der Zwischenspalt wird durch zwei Spaltschneiden 52 gebildet. Die Spaltschneiden 52 sitzen jeweils an einem flachen Spaltschneidenträger 57, welcher mit einem im wesentlichen rechteckigen Grundkörper 58 verbunden ist. Der Grundkörper 58 ist auf der Grundplatte der Spektrometer-Anordnung (nicht dargestellt) befestigt. Die Verbindungsstelle zwischen Träger 57 und Grundkörper 58 ist jeweils verjüngt und bildet das Federgelenk 51 einer Biegefeder.

Die Träger 57 sind an dem in Fig.2 unteren Ende ausgearbeitet. In der dadurch gebildeten Aussparung ist eine schrittmotorgesteuerte Exzenterscheibe 54 angeordnet. Wenn die Exzenterscheibe 54 um die Drehachse 55 gedreht wird, werden die beiden Träger 57 gegen die Rückstellkraft der Biegefedern 51 auseinander gedrückt bzw. bewegen sich wieder aufeinander zu. Die Spaltschneiden verlaufen also nicht exakt parallel zueinander, sondern üben vielmehr eine Scherbewegung aus. Der dadurch entstehende Einfluss auf die Bandbreitenbegrenzung ist jedoch insbesondere bei geringen Spalthöhen von zum Beispiel 1 mm vernachlässigbar.

Um eine ausreichende Bewegungsfreiheit der Träger 57 innerhalb des Grundkörpers 58 zu ermöglichen, sind Zwischenräume 59 dazwischen vorgesehen. Weiterhin ist ein Anschlagstift 53 vorgesehen, der die minimale Spaltbreite definiert.

Einem weiteres Ausführungsbeispiel der Zwischenspaltanordnung 50 gleicher Bauart ist in Fig. 3 dargestellt. Dort sind zusätzlich auf jeder Seite des Grundkörpers 58 feste Hilfsspalte 56 vorgesehen. Die Hilfsspalte 56 dienen als zusätzliche Kalibrierspalte zur Erhöhung der Liniendichte am Detektor bei der Kalibrierung des Echelle-Spektrometers.

Insgesamt wird das reelle Bild der Strahlungsquelle 11 im Eintrittsspalt durch die Optik des Vormonochromators 2 zunächst genau auf den Zwischenspalt 3 und nachfolgend durch die Optik des Echelle-Spektrometers auf den Detektor abgebildet (Fig.1).

Durch Einschwenken eines Drehspiegels 33 in den Messstrahlengang kann die Strahlung einer Neonlampe 31 als Linienstrahler eingekoppelt werden. Die Strahlung der Neonlampe wird mittels eines abbildenden Elementes 32 in der Ebene des Zwischenspaltes 3 fokussiert, im Echelle-Spektrometer ohne vorherige Ordnungstrennung dispergiert und als Spektrum am Detektor 5 detektiert.

Die beschriebene Anordnung arbeitet bei der Wellenlängeneinstellung wie folgt:

Zunächst wird der Zwischenspalt 3 auf eine Breite eingestellt, die wenig größer als die Eintrittsspaltbreite ist, zum Beispiel 30 Mikrometer. Dann wird der Spiegel 33 um die Achse 34 in den Strahlengang geschwenkt. Dadurch wird die Strahlung aus der Strahlungsquelle 11 mit dem kontinuierlichen Spektrum ausgeblendet und die Strahlung aus der Strahlungsquelle 31 mit dem Linienspektrum durch den Zwischenspalt in das Echelle-Spektrometer eingeblendet.

Das Echelle-Gitter 42 wird dann durch Drehung um die Achse 43 grob positioniert. Das heißt, daß eine für die Kalibration der gewünschten Meßwellenlänge ausgewählte Referenzlinie verwechslungssicher auf dem Zeilendetektor identifiziert werden kann. Diese Referenzlinie wird in Abhängigkeit von der Meß-Wellenlänge aus einem Wellenlängenkatalog bekannter Referenzlinien des Linienstrahlers ausgewählt. Die erreichte Position der Referenzlinie auf dem Zeilendetektor wird bestimmt. Dann wird diese Position mit der zuvor berechneten Sollposition verglichen. Die Sollposition wird dabei aus der Differenz der berechneten Beugungswinkel von Meßwellenlänge und Referenzlinie ermittelt.

Eine Abweichung der Position der Referenzlinie von ihrer Sollposition wird durch Feinkorrektur der Winkeleinstellung am Echelle-Gitter korrigiert und somit auch die Meßwellenlänge auf ihre Sollposition eingestellt. Das heißt, durch Drehung des Gitters wird die Linie auf ihre Position "geschoben". Das Echelle-Spektrometer ist nach diesem Schritt vollständig kalibriert. Jedem Detektorelement kann nun eindeutig und hochgenau eine Wellenlänge zugeordnet werden, wenn Strahlung einer bekannten Ordnung in das Spektrometer eintritt.

Zur Kalibrierung des im Vormonochromator angeordneten Prismas wird dann der Kontinuumsstrahler auf den Eintrittsspalt eingeblendet. Der Spiegel 33 wird wieder aus dem Strahlengang geschwenkt und das Linienspektrum wieder ausgekoppelt. Auch hier wird das Prisma 23 zunächst grob positioniert. Die Positionierung erfolgt in einer Weise, die garantiert, daß die Abweichung von der gewünschten Meßwellenlänge geringer ist, als der vom Zeilendetektor erfaßte Ausschnitt aus dem freien Spektralbereich derjenigen Ordnung im Echelle-Spektrum, in der die Meßwellenlänge mit maximaler Blazeeffektivität gemessen wird. Kurz, es wird die "richtige" Ordnung in das Echelle-Spektrometer eingekoppelt. Der Spektrenausschnitt kann dann verwechslungssicher auf dem Zeilendetektor identifiziert werden.

Da der Zwischenspalt auf eine schmale Breite eingestellt ist, erscheint der Spektrenausschnitt mit einem peakförmigen Profil, bei dem sich leicht ein Maximum, ein Halbwert oder dergleichen ermitteln lässt. Es kann auch bei größerem Zwischenspalt kalibriert werden. Dann erscheint der Spektrenausschnitt mit einem trapezförmigen Intensitätsprofil, bei welchem sich die Position zum Beispiel als Halbwerts-Mitte definieren lässt. Der Spektrenausschnitt wurde durch den Zwischenspalt ausgewählt und am Echelle-Gitter dispergiert.

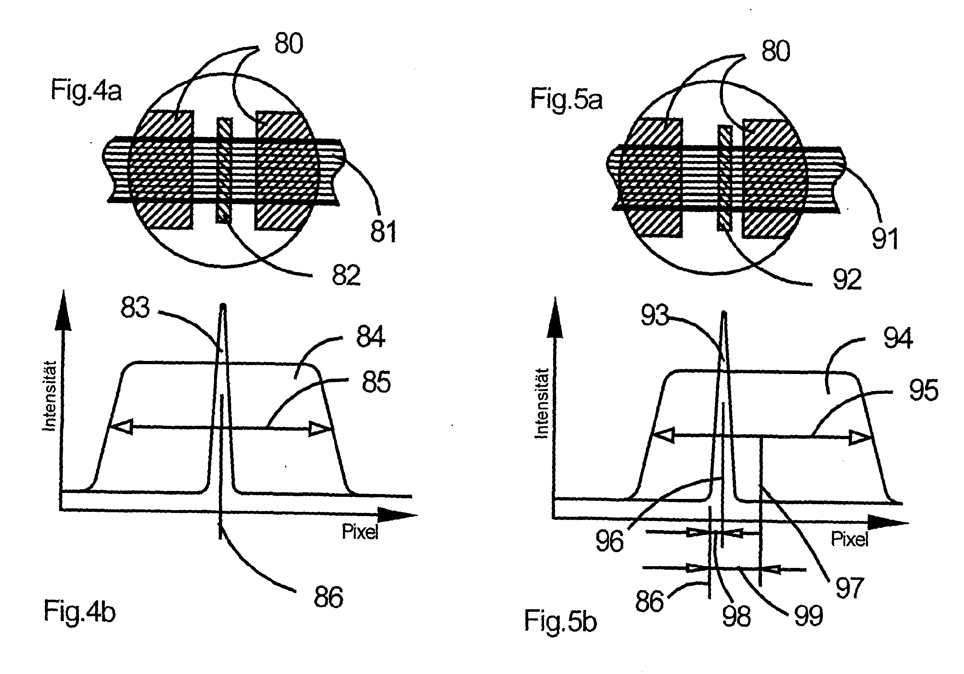

Fig. 4a ist eine starke Vergrößerung der Situation am Zwischenspalt 3 des Vormonochromators 2 in Fig.1. Gezeigt ist der Fall der idealen Justage des Vormonochromators, nachdem zuvor die Position des Echelle-Gitters 42 (Fig.1) mit Hilfe des internen Linienstrahlers 31 exakt eingestellt wurde.

Die Meßwellenlänge, repräsentiert durch eine Emissionslinie 82 steht exakt in der Mitte des Zwischenspaltes mit Spaltschneiden 80. Die Breite des Zwischenspaltes, welche durch den Abstand zwischen den Spaltschneiden 80 bestimmt ist, wurde so gewählt, daß für die spektrale Bandbreite des selektierten Spektrenausschnittes gilt, daß seine geometrische Breite nach der Dispersion und Abbildung auf den Zeilendetektor 5 im Echelle-Spektrometer 4 kleiner als die Detektorbreite ist. Im vorliegenden Fall liegt die Breite des Zwischenspaltes zwischen 0,05 und 0,1 mm. Die Breite des Zeilendetektors ist etwa 10 mm.

Fig. 4b zeigt die resultierenden Intensitätsverteilungen auf dem Zeilendetektor 5 für die Fälle der Messung der Emissionslinie 82 und eines Kontinuums 81 entsprechend Fig. 4a. Die Intensitätsverteilung 83 der Emissionslinie 82 ist nach erfolgter Kalibrierung des Echelle-Spektrometers symmetrisch zur Sollposition 86. Die Mitte des Halbwertes 85 der im wesentlichen trapezförmigen Intensitätsverteilung 84 für einen aus einem Kontinuum selektierten Spektrenausschnitt stimmt nach der ausgeführten Kalibrierung des Vormonochromators mit der Sollposition 86 der Meßwellenlänge exakt überein.

Aufgrund von Temperaturschwankungen oder anderen Störungen, kann sich diese Situation ändern. Eine solche gestörte Situation ist in Fig. 5 dargestellt. Fig. 5a zeigt stark vergrößert den Zwischenspalt für den Fall einer Verschiebung des Spektrums des Vormonochromators gegenüber dem Zwischenspalt. Die Meßwellenlänge, repräsentiert durch die verschobene Emissionslinie 92 steht nicht mehr in der Mitte zwischen den Spaltschneiden 80, d.h. auch die Position des Kontinuums 91 ist exakt um den gleichen Wert verschoben.

Fig. 5b zeigt die zugehörigen Intensitätsverteilungen auf dem Zeilendetektor für die Fälle der Messung der Emissionslinie 92 und des Kontinuums 91. Die Mittenposition der Intensitätsverteilung 93 der Emissionslinie 92 ist im Echelle-Spektrometer auf der Detektorzeile um etwa den gleichen Wert 98 gegenüber der Sollposition 86 verschoben, wie die Emissionslinie 92 gegenüber der Mitte zwischen den Spaltschneiden 80 des Zwischenspaltes. Demgegenüber ist die Verschiebung 99 der Mitte des Halbwertes 95 der trapezförmigen Intensitätsverteilung 94 des aus dem Kontinuum 91 selektierten Spektrenausschnitts deutlich größer, da der vom Zwischenspalt selektierte Spektrenausschnitt durch die Echelle-Dispersion auf dem Zeilendetektor stark gestreckt erscheint. Dies ist der Fall, da die Echelle-Dispersion wesentlich größer ist, als die Dispersion des Vormonochromators. Das Bild einer monochromatischen Emissionslinie wird dagegen durch die Echelle-Dispersion nicht wesentlich verbreitert.

Eine Verschiebung dieses Zwischenbildes erzeugt bezüglich der Intensitätsverteilung auf der Detektorzeile völlig unterschiedliche Resultate, wenn als Meßspektrum entweder ein Linienspektrum oder ein Kontinuum betrachtet wird. Die im Vergleich zur Linienverschiebung wesentlich größere Verschiebung der Halbwerts-Mitte des trapezförmigen Intensitätsprofils des Kontinuums, welche sich aus dem Verhältnis der Lineardispersionen von Echelle-Spektrometer und Vormonochromator erklärt, ermöglicht die hochgenaue Positionierung der Meßwellenlänge im Zwischenspalt unter Benutzung der Kontinuums-Messung.

Die Anordnung ist insbesondere für Meßverfahren geeignet, bei denen ohnehin ein Strahler mit kontinuierlichem Spektrum verwendet wird, z.B. Atomabsorptionsspektroskopie mit Kontinuumsstrahler (CSAAS) oder bei Atomabsorptionsspektroskopie mit Untergrundkompensation mittels Deuteriumstrahler.

## Patentansprüche

1. Verfahren zur Kalibrierung eines Spektrometers enthaltend
(a) eine Strahlungsquelle (11) mit kontinuierlichem Spektrum,
(b) einen Vormonochromator (2) zur Erzeugung eines Spektrums mit relativ geringer Lineardispersion aus welchem ein Spektrenausschnitt selektierbar ist, dessen spektrale Bandbreite kleiner oder gleich der Bandbreite des freien Spektralbereiches derjenigen Ordnung im Echelle-Spektrum ist, in der die Mittenwellenlänge des selektierten Spektrenausschnitts mit maximaler Blazeeffektivität messbar ist,
(c) ein Echelle-Spektrometer (4) mit Mitteln zur Wellenlängenkalibrierung
(d) einen Eintrittsspalt (21) an dem Vormonochromator (2),
(e) eine Zwischenspalt-Anordnung (50) mit einem Zwischenspalt (3),
(f) einen ortsauflösenden Strahlungsempfänger (5) in der Austrittsebene des Spektrometers zur Detektion von Wellenlängen-Spektren,
worin
(g) die Breite des Zwischenspalts (3) auf einen Wert einstellbar ist, der größer ist, als das durch den Vormonochromator am Ort des Zwischenspaltes entstehende monochromatische Bild des Eintrittsspaltes und
(h) Mittel zur Kalibrierung des Vormonochromators vorgesehen sind, durch welche die auf den Detektor abgebildete Strahlung der Strahlungsquelle mit kontinuierlichem Spektrum auf eine Referenzposition kalibrierbar ist;
**gekennzeichnet durch** die Schritte:
(a) Kalibrierung des Echelle-Spektrometers (4)
(b) Beleuchten des Eintrittsspalts (21) mit Strahlung mit einem kontinuierlichen Wellenlängenspektrum
(c) Einstellen der Breite des Zwischenspaltes (3) auf einen Wert, bei dem ein monochromatisches reelles Bild des Eintrittsspaltes eine geringere Breite aufweist als der Zwischenspalt,
(c) Ermitteln der Position des durchgelassenen Spektralbandes am Detektor (5) und
(d) Einstellen des durchgelassenen Spektralbandes am Detektor (5) auf eine Sollposition **durch** Einstellen des Vormonochromators (2).

2. Verfahren nach Anspruch 1, **dadurch gekennzeichnet, daß** zur Kalibrierung des Echelle-Spektrometers zunächst der Zwischenspalt mit Strahlung einer Strahlungsquelle (31) mit einem Linienspektrum bestrahlt wird, die Position einer oder mehrerer Linien mit dem Detektor (5) bestimmt und mit einer oder mehreren Sollpositionen verglichen wird und das Spektrometer (4) derart eingestellt wird, daß die Linien am Detektor diese Sollpositionen einnehmen.

3. Verfahren nach Anspruch 1 oder 2, **dadurch gekennzeichnet, daß** die Einstellung des Spektrometers (4) durch Drehung des Echelle-Gitters (42) um eine Achse (43) erfolgt, die parallel zu den Gitterfurchen ist.

4. Verfahren nach einem der Ansprüche 1 bis 3, **dadurch gekennzeichnet, daß** das Einstellen des Vormonochromators (2) durch Drehen eines in dem Vormonochromator angeordneten Prismas (23) um eine Achse (25) parallel zur Dachkante des Prismas erfolgt.

## Claims

1. Method for calibrating a spectrometer comprising
(a) a light source (11) with a continuous wavelength spectrum,
(b) a pre-monochromator (2) for generating a spectrum with a relatively small linear dispersion from which a spectral interval is selectable, the spectral bandwidth of such spectral interval being smaller or the same as the bandwidth of the free spectral range of such order in the echelle spectrum wherein the centre wavelength of the selected spectral portion is measurable with maximum blaze efficiency,
(c) an echelle spectrometer (4) with means for wavelength calibration,
(d) an entrance slit (21) at the pre-monochromator (2),
(e) an intermediate slit assembly (50) with an intermediate slit (3),
(f) a spatially resolving light detector (5) in the exit plane of the spectrometer for the detection of wavelength spectra, wherein
(g) the width of the intermediate slit (3) is adjustable to a value which is larger than the monochromatic image of the entrance slit generated by the pre-monochromator at the location of the intermediate slit, and
(h) means for calibrating the pre-monochromator are provided, which are adapted to calibrate to a reference position the light of the light source having a continuous spectrum and focused on the detector;
**characterised by the steps:**
(i) calibrating the echelle spectrometer (4),
(j) illuminating the entrance slit (21) with light with a continuous wavelength spectrum,
(k) adjusting the width of the intermediate slit (3) to a value, generating a monochromatic real image of the entrance slit having a smaller width than the intermediate slit,
(1) determining the position of the transmitted spectral band at the detector (5),
(m) adjusting the transmitted spectral band at the detector (5) to a desired position by adjusting the pre-monochromator (5).

2. Method according to claim 1, **characterised in that**, for calibrating the echelle spectrometer, first the intermediate slit is illuminated with light from a light source (31) with a line spectrum, the position of one or more lines is determined with the detector (5) and compared with one or more desired positions and the spectrometer (4) is adjusted in such a way that the lines at the detector assume such desired positions.

3. Method according to claim 2, **characterised in that** the adjustment of the spectrometer (4) is effected by rotating the echelle grating (42) about an axis (43) which is parallel to the grooves of the grating.

4. Method according to any of claims 1 to 3, **characterised in that** the adjustment of the pre-monochromator is effected by rotating a prism (23) arranged in the pre-monochromator (2) about an axis which is parallel to the roof edge of the prism.

## Revendications

1. Procédé pour le calibrage d'un spectromètre comprenant
(a) une source de rayonnement (11) à spectre continu,
(b) un prémonochromateur (2) destiné à générer un spectre de dispersion linéaire relativement faible à partir duquel on peut sélectionner un extrait de spectre dont la largeur de bande spectrale est inférieure ou égale à la largeur de bande de la gamme spectrale libre du degré dans le spectre échelle dans lequel la longueur d'ondes centrales de l'extrait de spectre sélectionné peut être mesurée avec une efficacité de Blaze maximale,
(c) un spectromètre échelle (4) muni de moyens destinés au calibrage de la longueur d'ondes,
(d) une fente d'entrée (21) placée sur le prémonochromateur (2),
(e) une disposition de fente intermédiaire (50) munie d'une fente intermédiaire (3),
(f) un récepteur de rayonnement à résolution spatiale (5) placé dans le plan de sortie du spectromètre pour la détection de spectres de longueurs d'ondes, dans lequel
(g) la largeur de la fente intermédiaire (3) peut être réglée jusqu'à une valeur supérieure à l'image monochromatique de la fente d'entrée générée par le prémonochromateur à l'endroit de la fente intermédiaire, et
(h) il est prévu des moyens de calibrage du prémonochromateur permettant de calibrer, sur une position de référence, le faisceau de la source de rayonnement à spectre continu qui est reproduit sur le détecteur ;
**caractérisé par** les étapes de :
(i) calibrage du spectromètre échelle (4),
(j) éclairage de la fente d'entrée (21) à l'aide du faisceau à spectre de longueur d'ondes continu,
(k) réglage de la largeur de la fente intermédiaire (3) jusqu'à une valeur pour laquelle une image monochromatique réelle de la fente d'entrée présente une largeur inférieure à la fente intermédiaire,
(1) détermination de la position de la bande spectrale passante sur le détecteur (5), et
(m) réglage de la bande spectrale passante sur le détecteur (5) jusqu'à une position de consigne en réglant le prémonochromateur (2).

2. Procédé selon la revendication 1, **caractérisé en ce que**, pour le calibrage du spectromètre échelle c'est d'abord la fente intermédiaire qui est exposée au faisceau d'une source de rayonnement (31) à spectre de raies, la position d'une ou de plusieurs raies est déterminée avec le détecteur (5) et est comparée à une ou plusieurs positions de consigne et le spectromètre (4) est réglé de sorte à ce que les raies situées sur le détecteur prennent ces positions de consigne.

3. Procédé selon la revendication 1 ou 2, **caractérisé en ce que** le réglage du spectromètre (4) s'effectue en tournant le réseau échelle (42) autour d'un axe (43) qui est parallèle aux barres du réseau.

4. Procédé selon l'une quelconque des revendications 1 à 3, **caractérisé en ce que** le réglage du prémonochromateur (2) s'effectue en tournant un prisme (23) disposé dans le prémonochromateur autour d'un axe (25) parallèlement au sommet du prisme.
